# EUROPÄISCHE PATENTANMELDUNG

(11) **EP 2 730 492 A1**
(43) Veröffentlichungstag der Anmeldung: **14.05.2014**
(21) Anmeldenummer: 13000547.3
(22) Anmeldetag: 03.02.2013
(51) Int. Cl.: B63B 43/00, B63H 20/00, B63H 21/17

(54) **Elektrischer Speicher mit Wassersensor**

(30) Priorität: 12.11.2012 DE 102012021994
(71) Anmelder: Torqeedo GmbH, 82205 Gilching (DE)
(72) Erfinder: Biebach, Jens, 82327 Tutzing (DE); Krieger, Philipp, 82340 Feldafing (DE); Hartmeyer, Marc, 81829 München (DE)
(74) Vertreter: Gellner, Bernd

(57) **Zusammenfassung**

Die Erfindung betrifft einen elektrischen Speicher, der mindestens ein Speicherelement (2) und einen positiven und einen negativen Pol (3, 4) aufweist, wobei die Pole (3,4) in stromleitender Verbindung mit dem Speicherelement (2) stehen und wobei der Elektromotor (18) an die Pole (3, 4) angeschlossen ist. Es ist ein Wassersensor (5, 13) vorgesehen, welcher feststellt, ob sich einer der Pole (3, 4) in Kontakt mit Wasser befindet, und wobei der Wassersensor (5, 13) in Wirkverbindung mit einer Abschalteinrichtung (9) steht, welche zur Unterbrechung der stromleitenden Verbindung zwischen mindestens einem der Pole (3, 4) und dem Speicherelement (2) dient (Figur 1).

## Beschreibung

Die Erfindung betrifft einen elektrischen Speicher, der mindestens ein Speicherelement und einen positiven und einen negativen Pol aufweist, wobei die Pole in stromleitender Verbindung mit dem Speicherelement stehen. Ferner bezieht sich die Erfindung auf ein Verfahren zur Sicherheitsabschaltung eines solchen elektrischen Speichers sowie auf ein Boot mit einem solchen Speicher.

Werden elektrische Kontakte, zwischen denen eine Gleichspannung anliegt, in Kontakt mit Wasser gebracht, kommt es zur Elektrolyse. Dabei tritt galvanische Kontaktkorrosion auf und es bildet sich Knallgas. Knallgas ist hochexplosiv und birgt entsprechendes Gefahrenpotenzial. Bei Spannungen, die höher als extraniedrige Spannung, d.h. höher als 60V sind, besteht für Personen außerdem die Gefahr von Stromunfällen.

Elektro-Außenbordmotoren für Boote werden daher bisher mit einem Gehäuse nach Schutzart IP67 ausgerüstet. Diese Gehäuse schützen den Elektro-Außenbordmotor gegen das Eindringen von Wasser beim kurzzeitigen Untertauchen. Die Prüfnorm schreibt hierfür in 1 m Tiefe eine Wasserdichtigkeit über 30 Minuten vor.

Der Schutzgrad IP67 garantiert die Wasserdichtigkeit bei einer Tauchtiefe von einem Meter nur für eine halbe Stunde. Bei einem Bootsunfall kann aber der Außenbordmotor auch in größere Tiefen absinken und/oder innerhalb einer halben Stunde nicht aus dem Wasser geborgen werden. Außerdem kann es im Havariefall zur Beschädigung der Isolierung des Gehäuses kommen, so dass anschließend doch wieder die Gefahr von Knallgasbildung und elektrischem Schlag besteht.

Aufgabe vorliegender Erfindung ist es daher, ein Verfahren und eine Vorrichtung bereit zu stellen, mit dem diese Gefahren vermieden werden.

Diese Aufgabe wird durch einen elektrischen Speicher gelöst, der mindestens ein Speicherelement und einen positiven und einen negativen Pol aufweist, wobei die Pole in stromleitender Verbindung mit dem Speicherelement stehen, welcher dadurch gekennzeichnet ist, dass ein Wassersensor vorgesehen ist, welcher feststellt, ob sich einer der Pole in Kontakt mit Wasser befindet, und wobei der Wassersensor in Wirkverbindung mit einer Abschalteinrichtung steht, welche zur Unterbrechung der stromleitenden Verbindung zwischen mindestens einem der Pole und dem Speicherelement dient.

Die Verwendung der Schutzklasse IP67 stellt zwar einen wichtigen Basisschutz dar. Auf Grund der zeitlichen Begrenzung und der Begrenzung, die sich aus der maximalen Tiefe ergibt, verbleiben jedoch Risiken, die durch die erfindungsgemäße Installation reduziert oder ausgeschlossen werden.

Ein wichtiges Anwendungsgebiet der Erfindung sind elektrische Speicher auf Booten, insbesondere auf Booten mit Elektroantrieb.

Die Erfindung schlägt vor, im Unglücksfall, wenn einer der Pole des elektrischen Speichers mit Wasser in Kontakt kommt, den oder die Pole spannungsfrei zu schalten, um zumindest weitere Folgeschäden zu minimieren und insbesondere die oben beschriebene Kontaktkorrosion zu vermeiden. Es wird daher ein Wassersensor vorgesehen, der den Kontakt eines der Pole mit Wasser detektiert. Wenn sich einer der Pole im Wasser oder unter Wasser befindet oder wenn eine bestimmte Feuchtigkeitsschwelle überschritten ist, wird der betreffende Pol oder werden beide Pole spannungsfrei geschaltet. Der Wassersensor steht dazu mit einer Abschalteinrichtung in Wirkverbindung, welche in diesem Fall die stromleitende Verbindung zwischen mindestens einem der Pole und dem elektrischen Speicher trennt.

Der elektrische Speicher ist insbesondere eine Batterie oder ein Akkumulator. Besonderen Sicherheitsgewinn bringt die Erfindung bei elektrischen Speichern, insbesondere Batterien oder Akkumulatoren, die eine Spannung von mehr als 60 V, mehr als 100 V oder mehr als 200 V zur Verfügung stellen. So wird die erfindungsgemäße Sicherheitsschaltung beispielsweise mit Vorteil auf Booten eingesetzt, die eine Spannungsversorgung von 300 V oder 400 V aufweisen.

Der Wassersensor registriert, wenn Wasser an der zu überwachenden Stelle auftritt. In dem Wassersensor kann beispielsweise ein optisches Messprinzip zum Einsatz kommen, bei dem die Anwesenheit von Wasser mittels einer Lichtquelle und einem Lichtempfänger festgestellt wird. Je nach Ausführungsform des Wassersensors wird Wasser an der Messstelle den Lichtstrom zwischen Lichtquelle und Lichtempfänger unterbrochen oder über Streuung erst ermöglichen. Eine Änderung des Lichtstroms zeigt damit die Anwesenheit von Wasser an der Messstelle an.

Alternativ beruht der Wassersensor auf einem elektrischen Messprinzip. Der Wassersensor besitzt hierbei einen ersten und einen zweiten Messkontakt sowie eine Messschaltung zur Bestimmung einer zwischen dem ersten und dem zwelten Messkontakt vorliegenden elektrischen Messgröße. Wenn der ursprünglich beispielsweise mit Luft gefüllte Zwischenraum zwischen den beiden Messkontakten mit Wasser gefüllt wird, so ändern sich der Widerstand bzw. die Leitfähigkeit zwischen den Messkontakten. Diese Änderung wird vom Wassersensor als Anwesenheit von Wasser interpretiert.

In einer weiteren Ausführungsform dient einer der Pole des elektrischen Speichers als eine der Messkontakte. Entweder der positive Pol oder der negative Pol des elektrischen Speichers werden als erster Messkontakt eingesetzt. Die Wasserdetektion erfolgt durch Messung einer elektrischen Größe, beispielsweise des elektrischen Widerstandes, zwischen einem der Pole und dem zweiten Messkontakt. Diese Vorgehensweise hat den Vorteil, dass die Wasserdetektion in unmittelbarer Nähe des einen Pols des elektrischen Speichers erfolgt.

In einer anderen Ausführungsform der Erfindung ist die Messschaltung über einen Vorwiderstand mit dem positiven und/oder dem negativen Pol verbunden, so dass der Strom aus der Messschaltung bzw. in die Messschaltung strombegrenzt ist und selbst im Falle eines harten Kurzschlusses zwischen einem Pol der Messschaltung und dem Pol der Batterie, der nicht Bestandteil der Messschaltung ist, einen kritischen Wert nicht übersteigt. Die Messschaltung ist normaler Weise darauf ausgelegt, die Impedanz zwischen einem Messkontakt und einem zweiten Messkontakt, der auch ein Batteriepol sein kann, zu ermitteln. Für den Fall, dass ein Batteriekontakt selbst Referenzkontakt ist, muss sichergestellt werden, dass es im Falle einer leitenden Verbindung zwischen dem nicht referenzierten Kontakt und dem Kontakt der Messschaltung nicht zu einer Beschädigung der Messschaltung kommt.

Bei einer weiteren Ausführungsform gibt es je eine Messschaltung zwischen einem Messkontakt und jeweils einem der Batterlekontakte, was insbesondere bei Batterien mit großer räumlicher Ausdehnung sinnvoll ist. Batterien werden im Allgemeinen waagerecht eingebaut, so dass alle Batteriepole eine gleiche Höhe Ober dem Wasserspiegel aufweisen. Bei einer Havarie könnte es zur Schräglage kommen, bei der dann einer der Batteriepole zeitlich signifikant eher Kontakt mit dem eindringenden Wasser hat und dann die Abschaltung des Speichers deutlich vor dem Wasserkontakt des zweiten Spelcherpoles stattfindet.

Bei einer weiteren Ausführungsform werden ausschließlich beide Speicherpole als Messkontakte verwendet. Diese Methode setzt voraus, dass die im fehlerfreien Zustand an den Speicherpolen wirksame Impedanz bekannt ist, was insbesondere bei Systemen mit unterschiedlichem Ausbaugrad schwierig ist. Kommt es dann zu einer signifikanten Impedanzänderung, werden die Batteriepole abgeschaltet.

Eine weitere Ausführungsform besteht in der Verwendung von Messkontakten, die in keiner Verbindung mit den Kontakten des elektrischen Speichers stehen. Diese Kontakte lassen sich dann so im Boot anordnen, dass Sie den Wasserkontakt feststellen, bevor die Pole des elektrischen Speichers mit dem Wasser in Verbindung kommen. Die Auswerteschaltung kann sich innerhalb oder außerhalb des Speichers befinden.

Die Erfindung kommt bevorzugt bei auf Booten befindlichen elektrischen Speichern, ganz besonders bei elektrischen Außenbordmotoren zum Einsatz. Insbesondere bei Außenbordantrieben, bei denen sich der elektrische Speicher oder die Batterie im Außenbordantrieb befinden, bringt die Erfindung einen wesentlichen Sicherheitsgewinn.

Das erfindungsgemäße Verfahren zur Sicherheitsabschaltung eines elektrischen Speichers, der einen positiven und einen negativen Pol aufweist, ist dadurch gekennzeichnet, dass detektiert wird, ob einer der Pole Kontakt mit Wasser hat, und im Falle der Detektion von Wasser die stromleitende Verbindung zwischen mindestens einem der Pole und dem elektrischen Speicher unterbrochen wird.

Die Detektion von Wasser erfolgt bevorzugt mittels eines elektrischen Messverfahrens, insbesondere durch Messung der elektrischen Leitfähigkeit oder des elektrischen Widerstandes.

Eines der Ziele der Erfindung ist es, die Kontaktkorrosion im Falle des Kontakts der Pole des elektrischen Speichers mit Wasser zu verhindern. Von Vorteil wird daher der elektrische Widerstand in der Umgebung mindestens einer der Pole bestimmt. Der Begriff in der Umgebung soll insbesondere bedeuten, dass die Messung in einem Abstand von weniger als 30 cm, weniger als 20 cm oder weniger als 10 cm von dem Pol vorgenommen wird. Beide Messkontakt werden in einem Abstand von weniger als 30 cm, weniger als 20 cm oder weniger als 10 cm von dem Pol vorgesehen. Besonders bevorzugt wird einer der Pole selbst als Messkontakt verwendet und der Widerstand zwischen dem Pol und dem zweiten Messkontakt wird detektiert.

Die Messkontakte werden räumlich bevorzugt so angeordnet, dass es bei der Montage des Speichers oder anderer Bootskomponenten nicht zu einem ungewollten Kontakt durch das verwendete Werkzeug kommen kann. Einem ungewollten Kontakt kann bei elektrischen Speichern unter anderem dadurch vorgebeugt werden, dass sich zwischen den Polen des Speichers eine mechanische Barriere befindet, die eine Berührung auf kurzer Distanz in direkter Luftlinie ausschließt. In einem solche Falle ist es sinnvoll, dass sich der Messkontakt auf der Seite der Barriere befindet, auf der auch der Speicherpol angeordnet ist, der keine Verbindung zur Messschaltung hat.

Der detektierte Widerstandswert wird beispielsweise mit einem Referenzwert verglichen. Wenn die Abweichung zwischen gemessenem Widerstandswert und dem Referenzwert eine bestimmte Schwelle übersteigt oder wenn der absolute Wert des gemessenen Widerstands eine bestimmte Schwelle über- oder unterschreitet, wird dies als Anwesenheit von Wasser interpretiert und einer der Pole oder beide Pole des elektrischen Speichers werden abgeschaltet.

Vorzugsweise erfolgt die Detektion von Wasser mittels eines Wechselspannungsmessverfahrens, um galvanische Kontaktkorrosion zu minimieren. Bei Verwendung einer Wechselspannungsquelle kann bevorzugt ein Kondensator als strombegrenzende Impedanz Verwendung finden, so dass ein zu hoher Gleichstrom gegen den Gegenpol des Speichers, der nicht Bestandteil der Sensorschaltung ist, unmöglich ist.

Die Anwesenheit von Wasser an einem oder beiden Polen des elektrischen Speichers kann nicht nur die beschriebene galvanische Kontaktkorrosion hervorrufen, sondern auch Schäden an anderen mit dem elektrischen Speicher leitend verbundenen Komponenten bewirken. Von Vorteil werden daher bei Detektion von Wasser weitere elektrische Verbraucher von dem elektrischen Speicher getrennt Insbesondere hat es sich als günstig erwiesen, in einem solchen Fall auch den Elektromotor schnell von dem elektrischen Speicher zu trennen, um Schäden am Elektromotor zu verhindern.

In einer anderen Ausführungsform ist eine Überwachungsleitung vorgesehen, über die alle an den elektrischen Speicher angeschlossenen Komponenten, insbesondere der Elektromotor, abgeschaltet werden können. Die Überwachungsleitung dient zur Sicherheitsabschaltung, wenn einer der Pole mit Wasser in Kontakt kommt.

Von Vorteil ist der elektrische Speicher zusätzlich zu der erfindungsgemaßen Wassererkennung mit weiteren Sicherheitseinrichtungen versehen. Die weiteren Sicherheitseinrichtungen umfassen vorzugsweise Mittel zur Erkennung und zum Schutz gegen Kurzschlüsse, Überladen oder Tiefentladung des elektrischen Speichers, und/oder Überhitzung der Batteriezeilen und/oder der Elektronik. Mit besonderem Vorteil sind einige oder alle Sicherheitseinrichtungen, z.B. der Wassersensor oder die oben genannten weiteren Sicherheitseinrichtungen redundant ausgelegt. Das heißt, einige oder alle sicherheitsrelevanten Funktionen sind doppelt vorhanden. Auf diese Weise wird gewährleistet, dass nicht der Ausfall einer Sicherheitseinrichtung selbst zu einem potentiellen Sicherheitsproblem wird.

In einer weiteren vorteilhaften Ausführung der Erfindung ist der elektrische Speicher, insbesondere eine Batterie, mit einer pyrotechnischen Sicherung ausgerüstet, welche im Falle eines Unfalls den Elektromotor und/oder andere an den elektrischen Speicher angeschlossene elektrische Komponenten von dem elektrischen Speicher zuverlässig trennt. Die pyrotechnische Sicherung weist beispielsweise eine pyrotechnische, entzündbare oder explosive Substanz auf. Übersteigt der über die pyrotechnische Sicherung fließende Strom eine bestimmten Grenzwert, so erwärmt sich ein ohmscher Widerstand in der Sicherung so stark, dass die pyrotechnische Substanz gezündet und die stromleitende Verbindung unterbrochen wird.

Die Erfindung sowie weitere vorteilhafte Einzelheiten der Erfindung werden im Folgenden anhand der schematischen Zeichnung beispielhaft erläutert. Hierbei zeigt
- Figur 1: eine erfindungsgemäße Batterie mit Wassersensor,
- Figur 2: eine alternative Ausführungsform der Erfindung,
- Figur 3: eine Variante der Erfindung mit zwei Wassersensoren,
- Figur 4: eine erfindungsgemäße Batterie mit mechanischem Schutz zur Vermeidung ungewollter Kurzschlüsse und
- Figur 5: eine weitere Variante der Erfindung.

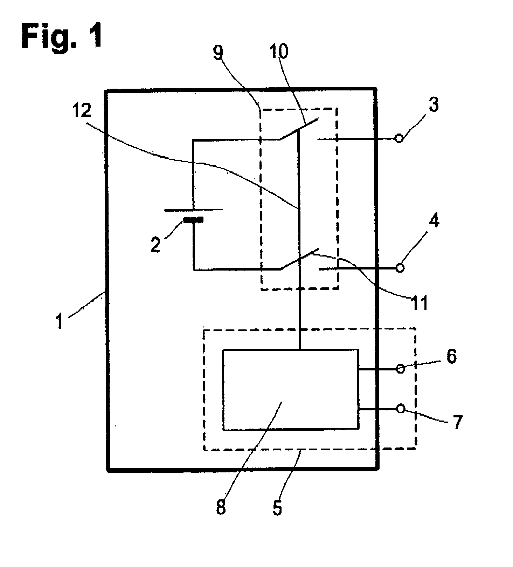

Figur 1 zeigt das Gehäuse 1 eines elektrischen Speichers, insbesondere einer Batterie oder eines Akkumulators, der eine Vielzahl von Speicherelementen, insbesondere galvanischen Zellen, besitzt. Die Zellen 2 sind an einen positiven Pol (Pluspol) 3 und an einen negativen Pol (Minuspol) 4 angeschlossen. In der Verbindung zwischen den Zellen 2 und den Polen 3, 4 befindet sich eine Abschalteinrichtung 9 mit zwei Schaltern 10, 11, welche in der Leitung zwischen den Zellen 2 und dem Pluspol 3 sowie in der Leitung zwischen den Zellen 2 und dem Minuspol 4 angeordnet sind. Durch Öffnen der Schalter 10, 11 kann die stromleitende Verbindung zwischen den Zellen 2 und den Polen 3, 4 unterbrochen werden und die Pole 3, 4 können spannungsfrei geschaltet werden.

Der elektrische Speicher wird bevorzugt als Spannungsquelle für einen Elektroantrieb auf einem Boot, insbesondere für Außenbordmotoren, eingesetzt.

In dem Gehäuse 1 ist ein Wassersensor 5 vorgesehen. Der Wassersensor 5 umfasst eine Messschattung 8 sowie zwei Messkontakte 6, 7, welche außerhalb des Gehäuses 1 oder an dessen Äußerem angeordnet sind. Die Messschaltung 8 ist über eine Steuerleitung 12 mit den Schaltern 10, 11 verbunden.

Die Messschaltung 8 bestimmt den elektrischen Widerstand zwischen den beiden Messkontakt 6, 7. Wenn die Messkontakte 6, 7 mit Wasser in Kontakt kommen, so ändert sich der elektrische Widerstand zwischen den Messkontakten 6, 7. Diese Änderung wird von der Messschaltung 8 als Anwesenheit von Wasser interpretiert und die Schalter 10, 11 werden Ober die Steuerleitung 12 angesteuert und geöffnet. Die Pole 3, 4 des elektrischen Speichers werden dadurch spannungsfrei geschaltet, um Kontaktkorrosion zu vermeiden und weitere Folgeschäden zu minimieren.

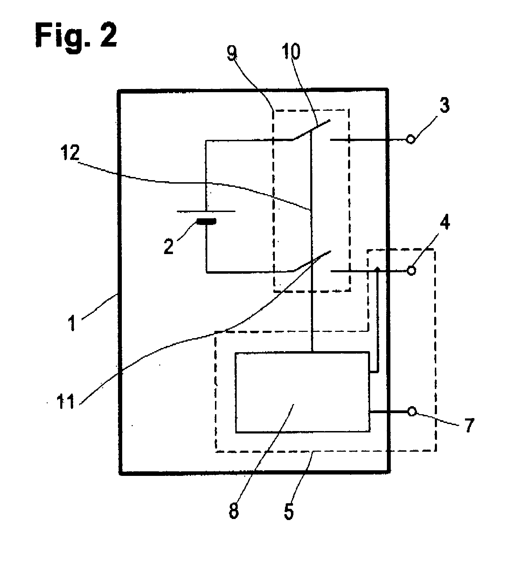

Figur 2 zeigt eine alternative Ausführungsform der Erfindung. Diese unterscheidet sich von der in Figur 1 gezeigten Version darin, dass der Minuspol 4 als Messkontakt dient. Im Übrigen sind in allen Figuren gleiche Bauteile mit den gleichen Bezugsziffern gekennzeichnet.

Die Wasserdetektion erfolgt in diesem Fall durch Messung einer elektrischen Größe, beispielsweise des elektrischen Widerstandes, zwischen dem Minuspol 4 und dem zweiten Messkontakt 7. Diese Vorgehensweise hat den Vorteil, dass die Wasserdetektion in unmittelbarer Nähe des einen Pols 4 des elektrischen Speichers erfolgt.

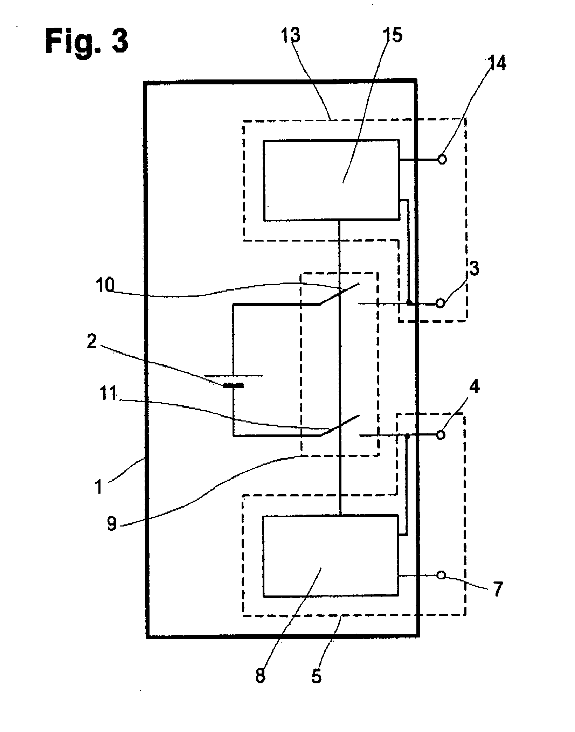

In Figur 3 ist eine weitere Ausführungsform dargestellt, bei der zwei Wassersensoren 5, 13 vorgesehen sind. Der Wassersensor 5 ist, wie anhand Figur 2 beschrieben, an den Minuspol 4 des elektrischen Speichers angeschlossen. Der Minuspol 4 wird als einer der beiden Messkontakte des Wassersensors 5 verwendet. In entsprechender Weise ist der zweite Wassersensor 13 ausgeführt, wobei der Pluspol 3 des elektrischen Speichers als einer der Messkontakt 3, 14 dient.

Die Messschaltung 8 registriert die Anwesenheit von Wasser im Bereich des Minuspols 4, die Messschaltung 13 registriert die Anwesenheit von Wasser im Bereich des Pluspols 3. Dies hat bei Batterien mit großer räumlicher Ausdehnung Vorteile. Batterien werden im Allgemeinen waagerecht eingebaut, so dass alle Batteriepole 3, 4 eine gleiche Höhe über dem Wasserspiegel aufweisen. Bei einer Havarie könnte es zur Schräglage kommen, bei der dann einer der Batteriepole 3, 4 zeitlich signifikant eher Kontakt mit dem eindringenden Wasser hat. Die in Figur 3 gezeigte Variante der Erfindung erlaubt dann eine frühzeitige Abschaltung des Speichers, deutlich bevor der zweite Speicherpol 3, 4 mit dem Wasser in Kontakt kommt.

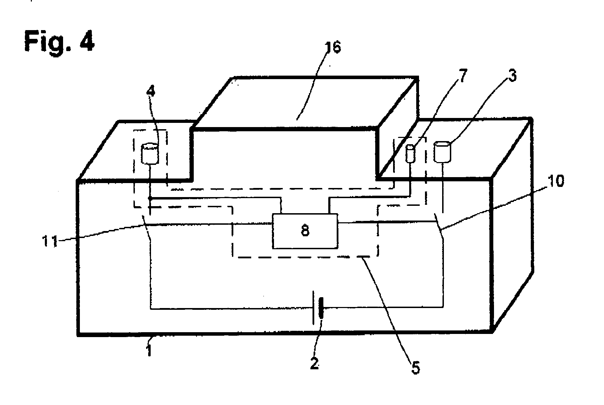

In Figur 4 ist ein elektrischer Speicher gemäß der Erfindung dargestellt, bei dem eine mechanische Barriere 16 vorgesehen ist, um bei der Montage des Speichers oder anderer Bootskomponenten durch das verwendete Werkzeug keinen ungewollten Kontakt zwischen den Batteriepolen 3, 4 und dem Messkontakt 7 herzustellen.

Die in Figur 4 gezeigte elektrische Schaltung entspricht der Schaltung gemäß Figur 2. Zwischen den Polen 3, 4 des elektrischen Speichers ist eine mechanische Barriere 16, beispielsweise in Form einer Erhöhung des Gehäuses, vorgesehen. Die Barriere 16 ist so ausgeführt, dass sie sich in der geradlinigen Verbindung in Luftlinie zwischen den beiden Polen 3, 4 befindet. Auf diese Weise wird die ungewollte Herstellung einer elektrisch leitenden Verbindung zwischen den beiden Polen 3, 4, zum Beispiel mittels eines Werkzeugs, verhindert oder zumindest erschwert.

Wenn der Wassersensor 5, wie dargestellt, so ausgeführt ist, dass einer der Pole 4 als Messkontakt dient, so ist es sinnvoll, den Messkontakt auf der Seite der Barriere 16 vorzusehen, auf der der Pol 3 des Speichers angeordnet ist, der keine Verbindung zur Messschaltung hat.

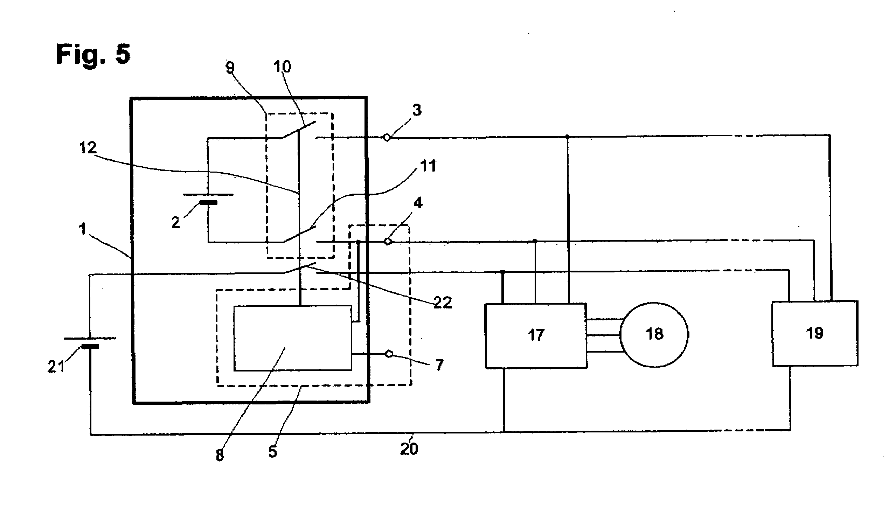

Schließlich ist in Figur 5 eine Ausführungsform der Erfindung dargestellt, bei der im Falle eines Unfalls, bei dem der Wassersensor 5 den Kontakt mit Wasser detektiert, nicht nur die Pole 3, 4, sondern auch weitere elektrische Komponenten 17, 18, 19 abgeschaltet werden.

Die gezeigte Schaltung des Wassersensors 5 entspricht der in Figur 2 gezeigten Schaltung. Selbstverständlich ist das im Folgenden erläuterte Konzept auch bei den Schaltungen gemäß den Figuren 1 oder 3 in entsprechender Weise anwendbar.

Hierzu ist zusätzlich eine Überwachungsleitung 20 vorgesehen, welche an eine Niedervolt-Spannungsquelle 21 angeschlossen ist. In dem in Figur 5 gezeigten Beispiel sind eine Motorsteuerung 17, welche einen Elektromotor 18 ansteuert, und eine weitere Komponente 19 an die Batteriepole 3, 4 angeschlossen. Die Überwachungsleitung 12 ist ebenfalls mit der Motorsteuerung 17 und der weiteren Komponente 19 verbunden. Außerdem ist in der Überwachungsleitung 20 ein Schalter 22 vorgesehen, Über den die Überwachungsleitung 20 getrennt werden kann.

Im Falle eines von dem Wassersensor 5 festgestellten Problems oder Unfalls öffnet die Messschaltung 8 nicht nur die Schalter 10, 11, um die Batteriepole 3, 4 spannungsfrei zu schalten, sondern es wird auch die Überwachungsleitung 20 durch Öffnen des Schalters 22 unterbrochen. Der Motorsteuerung 17 sowie der weiteren Komponente 19 wird dadurch ein Problem signalisiert. Die Motorsteuerung 17 wird den Elektromotor 18 abschalten und die weitere Komponente 19 wird ebenso ausgeschaltet. Auf diese Weise wird nicht nur galvanische Kontaktkorrosion an den Polen 3, 4 verhindert, sondern auch einer Schädigung an den anderen mit den Zellen 2 leitend verbundenen Komponenten 17, 18, 19 entgegengewirkt.

## Patentansprüche

1. Elektrischer Speicher, der mindestens ein Speicherelement (2) und einen positiven und einen negativen Pol (3, 4) aufweist, wobei die Pole (3, 4) in stromleitender Verbindung mit dem Speicherelement (2) stehen, **dadurch gekennzeichnet, dass** ein Wassersensor (5, 13) vorgesehen ist, welcher feststellt, ob sich einer der Pole (3, 4) in Kontakt mit Wasser befindet, und wobei der Wassersensor (5, 13) in Wirkverbindung mit einer Abschalteinrichtung (9) steht, welche zur Unterbrechung der stromleitenden Verbindung zwischen mindestens einem der Pole (3, 4) und dem Speichemlement (2) dient.

2. Elektrischer Speicher nach Anspruch 1, **dadurch gekennzeichnet, dass** der Wassersensor (5, 13) einen ersten und einen zweiten Messkontakt (6, 7) sowie eine Messschaltung (8) zur Bestimmung einer zwischen dem ersten und dem zweiten Messkontakt (6, 7) vorliegenden elektrischen Messgröße aufweist.

3. Elektrischer Speicher nach Anspruch 2, **dadurch gekennzeichnet, dass** der positive und/oder der negative Pol (3, 4) des elektrischen Speichers als erster und/oder zweiter Messkontakt dienen.

4. Elektrischer Speicher nach einem der Ansprüche 2 oder 3, **dadurch gekennzeichnet, dass** die Messchaltung (8) über einen Vorwiderstand mit dem positiven und dem negativen Pol (3, 4) verbunden ist.

5. Elektrischer Speicher nach einem der vorhergehenden Ansprüche, **dadurch gekennzeichnet, dass** zwischen den Polen (3, 4) des elektrische Speichers eine Spannung von mehr als 60 V, mehr als 100 V oder mehr als 200 V anliegt.

6. Elektrischer Speicher nach einem der vorhergehenden Ansprüche, **dadurch gekennzeichnet, dass** der elektrische Speicher als Spannungsquelle, insbesondere als Batterie oder Akkumulator, ausgeführt ist.

7. Elektrischer Speicher nach einem der vorhergehenden Ansprüche, **dadurch gekennzeichnet, dass** der positive und der negative Pol (3, 4) als Messkontakte dienen.

8. Boot mit einem elektrischen Speicher nach einem der Ansprüche 1 bis 7.

9. Boot nach Anspruch 8, **dadurch gekennzeichnet, dass** das Boot einen Elektromotor aufweist.

10. Verfahren zur Sicherheitsabschaltung eines befindlichen elektrischen Speichers, der mindestens ein Speicherelement (2) und einen positiven und einen negativen Pol (3, 4) aufweist, **dadurch gekennzeichnet, dass** detektiert wird, ob einer der Pole (3, 4) Kontakt mit Wasser hat, und im Falle der Detektion von Wasser die stromleitende Verbindung zwischen mindestens einem der Pole (3, 4) und dem Speicherelement (2) unterbrochen wird.

11. Verfahren nach Anspruch 10, **dadurch gekennzeichnet, dass** die Detektion von Wasser mittels eines elektrischen Messverfahrens erfolgt.

12. Verfahren nach Anspruch 10 oder 11, **dadurch gekennzeichnet, dass** der elektrische Widerstand in der Umgebung mindestens einer der Pole (3, 4) bestimmt wird, insbesondere in einem Abstand von weniger als 30 cm, weniger als 20 cm oder weniger als 10 cm von dem Pol bestimmt wird.

13. Verfahren nach Anspruch 11 oder 12, **dadurch gekennzeichnet, dass** die Detektion von Wasser mittels eines Wechselspannungsmessverfahrens erfolgt.

14. Verfahren nach einem der Ansprüche 10 bis 13, **dadurch gekennzeichnet, dass** bei Detektion von Wasser weitere elektrische Verbraucher (17, 18, 19) von dem abgeschaltet werden.

15. Verfahren nach einem der Ansprüche 10 bis 14, **dadurch gekennzeichnet, dass** sich der elektrische Speicher auf einem Boot befindet.
